Europäisches Patentamt

**European Patent Office**

**Office européen des brevets**

(19)

(11) Numéro de publication: **0 299 849 B1**

# (12) FASCICULE DE BREVET EUROPEEN

(45) Date de publication de fascicule du brevet: **09.09.92**  (51) Int. Cl.⁵: **B60R  25/04**

(21) Numéro de dépôt: **88401760.9**

(22) Date de dépôt: **06.07.88**

(54) **Dispositif antivol de véhicules automobiles par coupure d'alimentation de l'allumage.**

(30) Priorité: **09.07.87 FR 8709722**

(43) Date de publication de la demande:
**18.01.89 Bulletin  89/03**

(45) Mention de la délivrance du brevet:
**09.09.92 Bulletin  92/37**

(84) Etats contractants désignés:
**DE ES GB IT**

(56) Documents cités:
**US-A- 4 119 171**
**US-A- 4 672 225**

**ELECTRON, vol. 12, no. 2, février 1986, pages 62-65, Londres, GB; "Car burglar alarm"**

(73) Titulaire: **VALEO NEIMAN**
**12bis, rue Maurice Berteaux**
**F-78290 CROISSY-SUR-SEINE(FR)**

(72) Inventeur: **Bombled, Jean**
**25, Avenue Roger Salengro**
**F-78360 - Montesson(FR)**

(74) Mandataire: **Lemaire, Marc**
**VALEO Département Propriété Industrielle**
**30, rue Blanqui**
**F-93406 Saint-Ouen(FR)**

## Description

L'invention concerne un dispositif antivol de véhicules automobiles par coupure d'alimentation de l'allumage.

Les dispositifs antivols connus agissant par coupure de l'allumage présentent en général un grand danger pour l'utilisateur, ou entraînent une consommation électrique prohibitive lorsque le dispositif est à l'état de veille.

Dans le cas où le dispositif antivol comporte un relais de mise à la masse de la bobine, ce relais peut changer d'état par les chocs et vibrations en roulage, et produire un arrêt du moteur alors que le véhicule roule. Pour pallier cet inconvénient, on a proposé (demande de brevet français 86.17411 du 12/12/1986 correspondent an FR-A-2 608 112, publié le 17/06/1988, ne constituant pas un état de la technique selon l'article 54(2) CBE) d'utiliser un second contact, en série avec le contact d'inhibition d'allumage de la bobine, qui est maintenu ouvert en cas d'utilisation normale du véhicule.

Dans le cas d'un allumage électronique ou d'un allumeur transistorisé, de tels dispositifs de mise à la masse sont devenus inutilisables en raison du risque de destruction des composants par cette manoeuvre.

De nombreux dispositifs antivols sont donc maintenant fournis avec un relais commandé par la centrale du dispositif et dont le contact est mis en série avec le contact "marche" de l'interrupteur de l'antivol de direction.

Deux types de montage sont le plus fréquemment utilisés. Dans un premier type, le relais n'est pas alimenté quand le dispositif antivol est en veille, le circuit étant donc coupé vers l'alimentamtion de la bobine. Par contre, en roulage, le relais doit rester constamment sous tension, ce qui présente un risque en cas de défectuosité de la bobine du relais ou de son fil d'alimenta tion. Dans un second type de dispositif antivol, le relais n'est pas alimenté en roulage, donc ce risque est eliminé. Par contre, quand l'alarme est en veille, le relais est sous tension, donc la consommation est importante.

La présente invention vise à pallier ces inconvénients des dispositifs antivols connus, grâce à un nouveau dispositif antivol dans lequel le relais de coupure de l'alimentation n'est pas alimenté en permanence mais n'est alimenté qu'à condition que le dispositif antivol soit en veille, que le moteur du véhicule soit arrêté et qu'il y ait une tentative de vol matérialisée par la fermeture du contact "marche" de l'antivol de direction.

A cet effet, l'invention a pour objet un dispositif antivol de véhicules automobiles par coupure d'alimentation de l'allumage au moyen d'un relais alimenté par une centrale électronique dont le contact est en série avec le contact "marche" de l'antivol de direction du véhicule, caractérisé par le fait que ledit relais est alimenté par ladite centrale à travers au moins un transistor, ledit relais étant relié la masse par un dispositif interrupteur maintenu ouvert en cas de rotation du moteur.

Avantageusement, ledit transistor est relié à la masse par l'intermédiaire dudit dispositif interrupteur.

Dans une forme de réalisation préférée, le relais est alimenté par la centrale à travers deux transistors en cascade.

L'invention sera bien comprise à la lecture de la description suivante faite en se référant au dessin annexé dans lequel:

- la figure 1 est un schéma électrique d'un antivol selon une forme de réalisation de l'invention, la centrale étant en veille, et
- la figure 2 est analogue à la figure 1, la centrale étant à l'arrêt et le véhicule en marche.

L'antivol décrit comprend un relais $R_L$ alimenté par une centrale électronique de commande C et dont le contact $S_R$ est en série avec le contact "marche" M de l'antivol de direction du véhicule. La sortie S du contact $S_R$ alimente la bobine d'allumage ou un calculateur d'allumage (non représentés).

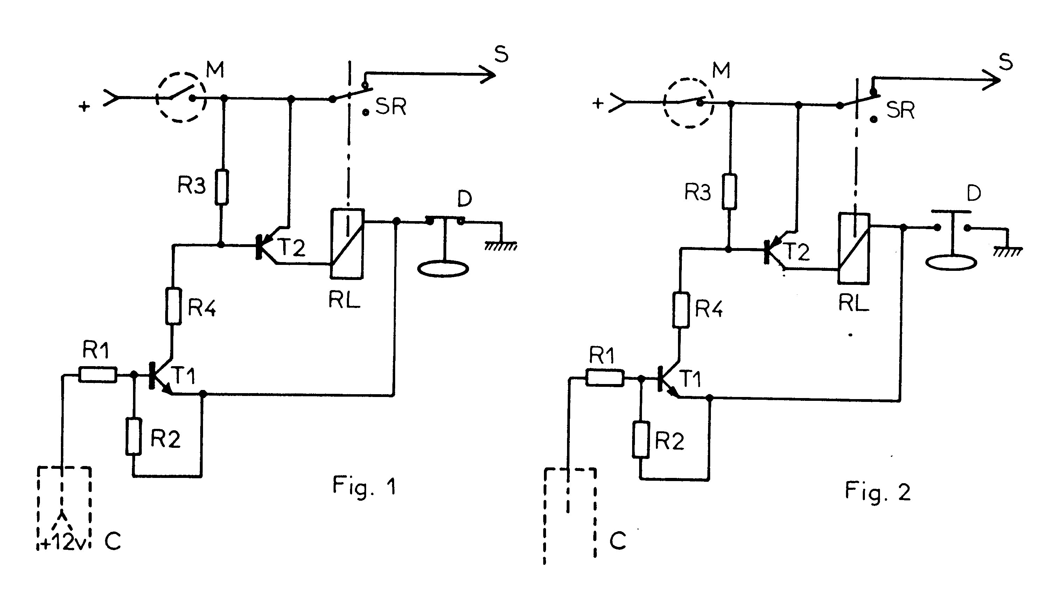

Conformément à l'invention, le relais $R_L$ est alimenté par la centrale C à travers un transistor $T_1$ et est relié à la masse par un dispositif contacteur D maintenu ouvert (figure 2) quand le moteur tourne. Ce dispositif contacteur D peut par exemple être le manocontact de pression d'huile existant sur le véhicule.

Dans l'exemple représenté, le transistor $T_1$ est associé avec un transistor $T_2$ monté en cascade, afin de limiter les intensités, avec des résistances $R_1$, $R_2$, $R_3$, $R_4$. En outre, le collecteur du transistor $T_1$ est relié directement au dispositif contacteur D, de sorte que le transistor $T_1$ n'est pas conducteur lorsque ce contact D est ouvert.

A l'état de veille, la centrale C polarise positivement la base du transistor $T_1$, qui est donc conducteur, ce qui polarise négativement la base du transistor $T_2$ qui est donc aussi à l'état conducteur mais n'alimente pas le relais $R_L$,car le contact M de l'antivol est coupé (voir figure 1).

En cas de tentative de démarrage dans ces conditions, par fermeture ou shuntage du contact M de l'antivol, le relais $R_L$ est immédiatement alimenté au travers du transistor $T_2$, ce qui coupe le contact SR, donc l'alimentation de la bobine ou du calculateur d'allumage interdisant le démarrage du véhicule.

Quand la centrale C est à l'arrêt et le véhicule en marche (figure 2), on retrouve une double sécurité. D'une part, la centrale C ne polarise plus la

base du transistor $T_1$; donc, les transistors $T_1$ et $T_2$ sont bloqués et RL n'est pas alimenté. D'autre part, le contact D étant ouvert, le relais RL n'est plus relié à la masse; donc, même en cas de défaillance par mise en court-circuit des transistors $T_1$ ou $T_2$, le relais $R_L$ ne sera pas appelé et le contact SR restera en position repos.

**Revendications**

1. Dispositif antivol de véhicules automobiles par coupure d'alimentation de l'allumage au moyen d'un relais ($R_L$) alimenté par une centrale électronique (C) dont le contact est en série avec le contact "marche" (M) de l'antivol de direction du véhicule, caractérisé par le fait que ledit relais ($R_L$) est alimenté par ladite centrale (C) à travers au moins un transistor ($T_1$), ledit relais ($R_L$) étant relié à la masse par un dispositif interrupteur (D) maintenu ouvert en cas de rotation du moteur.

2. Dispositif antivol selon la revendication 1, caractérisé par le fait que ledit transistor ($T_1$) est relié à la masse par l'intermédiaire dudit dispositif interrupteur (D).

3. Dispositif antivol selon l'une des revendications 1 et 2, caractérisé par le fait que le relais ($R_L$) est alimenté par la centrale (C) à travers deux transistors ($T_1$, $T_2$) en cascade.

**Claims**

1. An anti-theft device for a motor vehicle acting by cutting off the electrical supply to the ignition by means of a relay ($R_L$) supplied by a central electronic unit (C) the contact of which is in series with the "active" contact (M) of the anti-theft device of the steering of the vehicle, characterised by the fact that the said relay ($R_L$) is supplied from the said central unit (C) through at least one transistor ($T_1$), the said relay ($R_L$) being connected to earth through an interrupter device (D) which is held open when the engine is running.

2. An anti-theft device according to Claim 1, characterised by the fact that the said transistor (T1) is connected to earth through the said interrupter device (D).

3. An anti-theft device according to Claim 1 or Claim 2, characterised by the fact that the relay ($R_L$) is supplied from the central unit (C) through two transistors ($T_1$, $T_2$) arranged in cascade.

**Patentansprüche**

1. Kraftfahrzeug-Diebstahlsicherung mittels Zündstromunterbrechung mit Hilfe eines Relais ($R_L$), welches von einer Elektronikzentrale (C) gespeist wird, deren Kontakt mit dem Einschaltkontakt "Ein" (M) der Lenkradsicherung des Fahrzeugs in Reihe geschaltet ist, **dadurch gekennzeichnet,** daß das genannte Relais ($R_L$) von der genannten Zentrale (C) über wenigstens einen Transistor ($T_1$) gespeist wird, wobei das genannte Relais ($R_L$) über eine Unterbrechungsvorrichtung (D), die bei rotierendem Motor offengehalten wird, an Masse gelegt ist.

2. Diebstahlsicherung nach Anspruch 1, **dadurch gekennzeichnet,** daß der genannte Transistor ($T_1$) über die genannte Unterbrechungsvorrichtung (D) an Masse gelegt ist.

3. Diebstahlsicherung nach einem der Ansprüche 1 und 2, **dadurch gekennzeichnet,** daß das Relais ($R_L$) von der Zentrale (C) über zwei Transistoren ($T_1$, $T_2$) in Kaskadenschaltung gespeist wird.

Fig. 1

Fig. 2